# EUROPEAN PATENT SPECIFICATION

(11) **EP 3 841 484 B1**
(45) Date of publication and mention of the grant of the patent: **19.10.2022**
(21) Application number: 19740191.2
(22) Date of filing: 26.06.2019
(51) Int. Cl.: G06F 13/40

(54) **LINK LAYER DATA PACKING AND PACKET FLOW CONTROL SCHEME**
VERBINDUNGSSCHICHTDATENPACKUNG UND PAKETFLUSSSTEUERUNGSSCHEMA
COMPRESSION DE DONNÉES DE COUCHE DE LIAISON ET SCHÉMA DE COMMANDE DE FLUX DE PAQUETS

(30) Priority: 20.08.2018 US 201816105367
(43) Date of publication of application: 30.06.2021
(73) Proprietor: Advanced Micro Devices, Inc., Santa Clara, CA 95054 (US)
(72) Inventor: DONLEY, Greggory D., San Jose, California 95117 (US); BROUSSARD, Bryan P., Austin, Texas 78739 (US); KALYANASUNDHARAM, Vydhyanathan, San Jose, California 95138 (US)
(74) Representative: Hancox, Jonathan Christopher
(86) International application number: PCT/US2019/039276
(87) International publication number: WO 2020/040873

(56) References cited:
- EP-A1- 1 750 202
- US-A1- 2002 097 733
- US-B1- 6 721 334

## Description

### BACKGROUND

### Description of the Related Art

In computing systems, some types of applications perform functions that are better able to exploit parallel processing and shared memory than other applications. Examples of such applications include machine learning applications, entertainment and real-time applications, as well as some business, scientific, medical and other applications. While some processor architectures include more than one processing unit (e.g., CPU, GPU, etc.) or processing core, in some cases, one or two additional processing units or cores coupled to a memory does not necessarily provide a sufficient level of parallelism to provide a desired level of performance.

In addition to read and write access commands and corresponding data, coherency probes, interrupts and other communication messages are also transferred in the system through a communication fabric (or fabric). Examples of interconnections in the fabric are bus architectures, crossbar-based architectures, network-on-chip (NoC) communication subsystems, communication channels between dies, silicon interposers used to stack chips side-by-side, through silicon vias (TSVs) used to vertically stack special-purpose dies on top of processor dies, and so on.

In many cases, the fabric has multiple physical channels, each supporting relatively wide packets. While transferring data within a single fabric, the fabric reduces latency as a relatively high number of physical wires are available. However, when connecting separate dies together via the fabric, and when connecting separate processing nodes together, each with a respective fabric, the data is transferred over a significantly lower number of physical wires, which limits available bandwidth. In some cases, the link physical wires transfer data with a data rate that is a multiple of the physical wire data rate on the die. However, there is still a significant bandwidth reduction when communicating between die and between nodes.

In addition to the above inefficiency for transporting data, packets of varying type from different sources are many times combined together along with control information. One or more of the sources of the varying packet types have different bus widths and carry varying amounts of information from packet to packet within a single source. Many times, these packets of different sizes from different sources are combined in an inefficient manner, which further reduces link bandwidth efficiency.

Further still, when the rate of sending packets from a transmitter does not match the rate of receiving packets at a receiver, data corruption occurs through data collision at the receiver. In one example, the transmitter is a graphics processing unit (GPU) in a processing unit and the receiver is the fabric. A conservative approach of reducing the sending data rate of packets from the transmitter prevents data corruption, but it also further reduces the link bandwidth efficiency. EP 1750202 (Nvidia Corp) discloses subject matter relevant to the present application.

In view of the above, efficient methods and systems for performing efficient data transfer in a computing system are desired.

### BRIEF DESCRIPTION OF THE DRAWINGS

The advantages of the methods and mechanisms described herein may be better understood by referring to the following description in conjunction with the accompanying drawings, in which:
FIG. 1 is a block diagram of one embodiment of a computing system.
FIG. 2 is a block diagram of one embodiment of a packet transmitter.
FIG. 3 is a flow diagram of one embodiment of a method for performing efficient data transfer in a computing system.
FIG. 4 is a flow diagram of another embodiment of a method for performing efficient data transfer in a computing system.
FIG. 5 is a flow diagram of another embodiment of a method for performing efficient data transfer in a computing system.
FIG. 6 is a block diagram of one embodiment of a packet receiver.
FIG. 7 is a flow diagram of another embodiment of a method for performing efficient data transfer in a computing system.

### DETAILED DESCRIPTION OF EMBODIMENTS

In the following description, numerous specific details are set forth to provide a thorough understanding of the methods and mechanisms presented herein. However, one having ordinary skill in the art should recognize that the various embodiments may be practiced without these specific details. In some instances, well-known structures, components, signals, computer program instructions, and techniques have not been shown in detail to avoid obscuring the approaches described herein. It will be appreciated that for simplicity and clarity of illustration, elements shown in the figures have not necessarily been drawn to scale. For example, the dimensions of some of the elements may be exaggerated relative to other elements.

Various systems, apparatuses, methods, and computer-readable mediums for performing efficient data transfer in a computing system are disclosed. In various embodiments, a computing system includes one or more clients for processing applications. Examples of the clients include a general-purpose central processing unit (CPU), a graphics processing unit (GPU), an accelerated processing unit (APU), an input/output (I/O) device and so forth. The computing system also includes at least a power controller, and multiple link interfaces for transferring data between clients.

In various embodiments, one or more clients and the fabric include fabric interfaces, each with a packet transmitter and a packet receiver. The packet transmitter includes multiple queues, each for storing packets of a respective type. Examples of packet type include request type, response type, probe type, and token or credit type. Other examples of type include a type of data in a packet such as a command or a message, which are control types. For a write request, in some embodiments, the write request is divided into a write command inserted in a command or control packet. The write request also is divided into a separate write data packet corresponding to the write command. A read request is sent as a read command inserted in a command or control packet. The response for the read command is sent as a read message inserted in a command or control packet. The read response data is inserted in a separate data packet.

In some embodiments, two or more of the multiple queues store packets of different size. In an embodiment, the packet transmitter also includes multiple queue arbiters, each for selecting a candidate packet from a respective one of the multiple queues. The packet transmitter additionally includes a buffer for storing a link packet. In various embodiments, the link packet includes data storage space for storing multiple candidate packets. The link packet is sent out to a receiver via link that is no longer busy transferring other data. In some embodiments, the buffer for storing the link packet includes multiple registers, flip-flop circuits, or other sequential elements.

The packet transmitter also includes a packing arbiter, which selects qualified candidate packets from the multiple queues and inserts these candidate packets into the link packet. In some embodiments, the packing arbiter selects and inserts candidate packets into the link buffer based on one or more attributes that include an age, a priority level of the packet type, a quality-of-service parameter, a source identifier, an application identifier or type, such as a real-time application, an indication of traffic type, such as real-time traffic, a bandwidth requirement or a latency tolerance requirement, and so forth. In various embodiments, the packing arbiter also determines whether the filling link packet has remaining available data storage space for a given candidate packet. In some embodiments, the packing arbiter also determines whether the filling link packet has remaining available data storage space aligned on a given boundary for a given candidate packet.

The packing arbiter includes control logic for taking into consideration mismatches between the rate of packing (inserting) candidate packets into the link packet and the rate of creating available data storage space in a receiving queue in the receiver. The mismatch also results from the network in the fabric adding and deleting clock cycles when the link is available for transmitting the link packet.

In one example, when the fabric interfaces detect data transfer errors and resend data, idle clock cycles are inserted onto the link from the point of view of the packet transmitter. In some cases, these idle cycles are not maintained, but removed between two link packets sent from the packet transmitter due to bus utilization and arbitration throughout the network in the fabric. Therefore, to avoid data collision at the receiving queue of the receiver, the packet transmitter maintains a first count of enabled network cycles, each allowing a next link packet to use the link connected to the packet transmitter, and a second count of a number of candidate packets of a given type inserted in the link packet. The packet transmitter stores a third count of a minimum number of cycles between received link packets for the receiver to avoid data collision in a receiving queue storing packets of the given type. The packet transmitter uses these counts to determine when to insert a given candidate packet into the link packet.

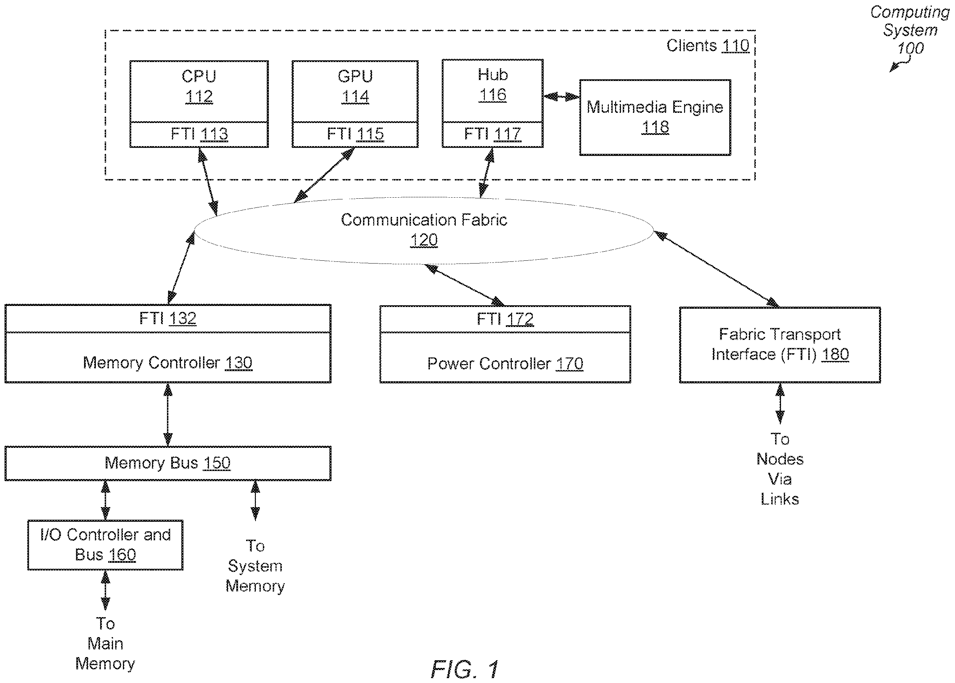

Referring to FIG. 1, a generalized block diagram of one embodiment of a computing system 100 is shown. As shown, computing system 100 includes communication fabric 120 between each of clients 110, memory controller 130, power controller 170 and link interfaces 180. In some embodiments, the components of processing node 100 are individual dies on an integrated circuit (IC), such as a system-on-a-chip (SOC). In other embodiments, the components are individual dies in a system-in-package (SiP) or a multi-chip module (MCM).

In the illustrated embodiment, clients 110 include central processing unit (CPU) 112, graphics processing unit (GPU) 114 and Hub 116. Hub 116 is used for communicating with Multimedia Engine 118. The CPU 112, GPU 114 and Multimedia Engine 118 are examples of computing resources capable of processing applications. Although not shown, in other embodiments, other types of computing resources are included in clients 110. Each of the one or more processor cores in CPU 112 includes circuitry for executing instructions according to a given selected instruction set architecture (ISA). In various embodiments, each of the processor cores in CPU 112 includes a superscalar, multi-threaded microarchitecture used for processing instructions of the given ISA. In an embodiment, GPU 114 includes a high parallel data microarchitecture with a significant number of parallel execution lanes. In one embodiment, the microarchitecture uses single-instruction-multiple-data (SIMD) pipeline for the parallel execution lanes. Multimedia Engine 118 includes processors for processing audio data and visual data for multimedia applications.

In one embodiment, power controller 170 collects data from clients 110 such as predetermined sampled signals during given sample intervals. In some embodiments, on-die current sensors and temperature sensors in node 100 also send information to power controller 170. In some embodiments, power controller 170 selects a respective power-performance state (P-state) for each of the computing resources in clients 110. The P-state includes at least an operating voltage and an operating clock frequency.

Although a single memory controller 130 is shown, in other embodiments, another number of memory controllers are used in processing node 100. In various embodiments, memory controller 130 receives memory requests from clients 110 via the fabric 120, schedules the memory requests, and sends the scheduled memory requests to one or more of system memory and main memory. Memory controller 130 also receives responses from system memory and main memory and sends the responses to a corresponding source of the request in clients 110. In various embodiments, system memory is filled with data from main memory through the I/O controller and bus 160 and the memory bus 150. A corresponding cache fill line with the requested block is conveyed from main memory to a corresponding one of the cache memory subsystems in clients 110 in order to complete the original memory request. The cache fill line is placed in one or more levels of caches.

In some embodiments, the address space of processing node 100 is divided among at least CPU 112, GPU 114 and Hub 116 and one or more other components such as input/output (I/O) peripheral devices (not shown) and other types of computing resources. Memory maps are maintained for determining which addresses are mapped to which component, and hence to which one of CPU 112, GPU 114 and Hub 116 a memory request for a particular address should be routed. In an embodiment, system memory is one of a variety of dynamic random access memory (DRAM) and a corresponding protocol is supported by memory controller 130. The protocol determines values used for information transfer, such as a number of data transfers per clock cycle, signal voltage levels, signal timings, signal and clock phases and clock frequencies. In some embodiments, main memory is one of a variety of types of non-volatile, random access secondary storage of data. Examples of main memory are hard disk drives (HDDs) and solidstate disks (SSDs).

In various embodiments, communication fabric 120 (or fabric 120) transfers traffic back and forth between computing resources 110 and memory controller 130 and includes interfaces for supporting respective communication protocols. The "traffic" includes data such as commands, messages, probes, interrupts, and data corresponding to the commands and messages. In some embodiments, fabric 120 includes at least queues for storing requests and responses, selection logic for arbitrating between received requests before sending requests across an internal network, logic for building and decoding packets, and logic for selecting routes for the packets.

In some embodiments, fabric transport interface (FTI) 180 supports communication between computing system 100 and other computing systems or processing nodes by transferring traffic on links. In various embodiments, the traffic sent across the links include an indication of an operating state for one or more processing nodes, a power down request, responses to requests, interrupts, and other information. As shown, clients 110 includes FTI 113 for CPU 112, FTI 115 for GPU 114 and FTI 117 for Hub 116. Additionally, memory controller 130 includes FTI 132, whereas power controller 170 includes FTI 172. Fabric 120 includes multiple fabric transport interfaces, which are not shown for ease of illustration. In some embodiments, each link connected to a fabric transport interface is a point-to-point communication channel. In other embodiments, one or more links connected to a fabric transport interface is an end-to-end communication channel.

At the physical level, a link includes one or more lanes. In some embodiments, the fabric transport interfaces include control logic and buffers or queues used for communication. In some embodiments, the fabric transport interfaces and the corresponding links include communication protocol connections such as PCIe (Peripheral Component Interconnect Express), InfiniBand, RapidIO, HyperTransport, Advanced eXtensible Interface (AXI), and so forth.

In some embodiments, each of the fabric transport interfaces includes multiple queues, each for storing packets of a respective type. Additionally, there are multiple queue arbiters, each for selecting a candidate packet from a respective one of the multiple queues. One or more of the fabric transport interfaces in computing system 100 include a buffer for storing a link packet, which includes data storage space for storing multiple candidate packets. In some embodiments, two or more of the multiple queue store candidate packets of different sizes. A packing arbiter in the fabric transport interface selects qualified candidate packets from the multiple queues and inserts these candidate packets into the link packet. In some embodiments, the packing arbiter also determines whether the filling link packet has remaining available data storage space aligned on a given boundary for a given candidate packet. A packet receiver in the fabric transport interface includes a receiving queue for receiving the link packet sent by the packet transmitter. The packing arbiter in the packet transmitter avoids data collisions at the receiver by taking into consideration mismatches between the rate of inserting candidate packets into the link packet and the rate of creating available data storage space in a receiving queue in the receiver.

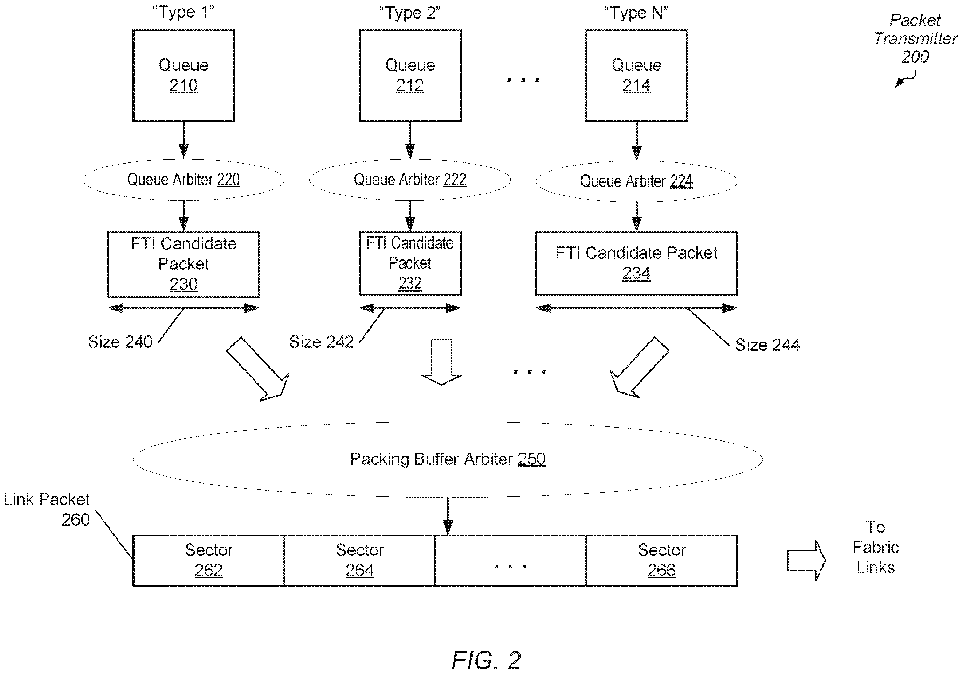

Referring to FIG. 2, a generalized block diagram of one embodiment of a packet transmitter 200 is shown. In the illustrated embodiment, packet transmitter 200 includes queues 210-214, each for storing packets of a respective type. In some embodiments, the packet is a flow control unit ("flit"). A flit is a subset of a larger packet. Flits generally carry data and control information, such as header and tail information for the larger packet. Although the data for transmission is described as packets routed in a network, in other embodiments, the data for transmission is a bit stream or a byte stream in a point-to-point interconnection. In various embodiments, queues 210-214 store control packets to be sent on a fabric link. Corresponding data packets, such as the larger packets corresponding to flits, are sent from another source.

In some embodiments, one or more other sources, such as a source for the larger, data packets, share a fabric link with packet transmitter 200. Therefore, the fabric link is not always available for sending control packets. Packet transmitter 200 also includes packing buffer arbiter 250 for inserting one or more of the candidate packets 230-234 into link packet 260. Link packet 260 has sufficient data storage space for storing two or more of the fabric transport interface (FTI) candidate packets 230-234. In an embodiment, packet transmitter 200 sends link packet 260 on the fabric link when two requirements are met. The first requirement is the fabric transport interface sends a signal to packet transmitter 200 indicating that the fabric link is available. The second requirement is packet transmitter 200 determines the link packet 260 is not empty.

Examples of control packet types stored in queues 210-214 include request type, response type, probe type, and token or credit type. Other examples of packet types are also included in other embodiments. As shown, queue 210 stores packets of "Type 1," which is a control request type in an embodiment. Queue 212 stores packets of "Type 2," which are control response type in an embodiment. Queue 214 stores packets of "Type N," which are control token or credit type in an embodiment.

Queue arbiter 220 selects fabric transport interface (FTI) candidate packet 230 from queue 210. In some embodiments, queue arbiter 220 selects FTI candidate packet 230 based on one or more attributes that include an age, a priority level of the packet type, a priority level of the packet, a quality-of-service parameter, a source identifier, an application identifier or type, such as a real-time application, an indication of traffic type, such as real-time traffic, a bandwidth requirement or a latency tolerance requirement, and so forth. In a similar manner, queue arbiters 222-224 select FTI candidate packets 232-234 from queues 212-214.

In some embodiments, queue arbiters 220-224 select FTI candidate packets 230-234 from queues 210-214 each clock cycle. In other embodiments, queue arbiters 220-224 select FTI candidate packets 230-234 from queues 210-214 after previously selected FTI candidate packets 230-234 have been inserted in link packet 260. In yet other embodiments, queue arbiters 220-224 select FTI candidate packets 230-234 from queues 210-214 after previously selected FTI candidate packets 230-234 have been selected by packing buffer arbiter 250, but not inserted in link packet 260 due to unavailable data storage space in link packet 260, unavailable data storage space aligned to a given boundary in link packet 260, or other unsatisfied conditions.

As shown, each of the FTI candidate packets 230-234 has different data sizes 240-244. In some embodiments, two or more of the FTI candidate packets 230-234 have a same data size. In an embodiment, one or more of the queues 210-214 stores FTI packets of different sizes. Therefore, when a given one of the queue arbiters 222-224 selects a FTI candidate packet, the selected FTI candidate packet has a different size than a previous selected FTI candidate packet selected from the same queue. In an example, when queue 210 stores packets of a request type, queue 210 stores uncompressed request packets with a size of 128 bits, and stores compressed request packets with a size of 64 bits. Therefore, some entries of queue 210 store FTI candidate packets with data sizes different from data size 240.

As shown, link packet 260 is partitioned into sectors 262-266. In an embodiment, each sector is 32 bits. Other data sizes for the sectors 262-266 are possible and contemplated. In an embodiment, link packet 260 includes eight sectors. In other embodiments, link packet 260 includes another number of sectors. In various embodiments, link packet 260 is stored in registers. In other embodiments, other sequential storage elements are used. In addition to storing data such as the control FTI candidate packets, other metadata (not shown) is stored such as an indication of which one(s) of the sectors 262-266 are available and which ones are allocated. Packing buffer arbiter 250 receives FTI candidate packets 230-234 and selects one or more of the received FTI candidate packets 230-234 for insertion in available data storage space in link packet 260. In some embodiments, packing buffer arbiter 250 is capable of selecting and inserting one of the FTI candidate packets 230-234 into link packet 260 per clock cycle. In another embodiment, packing buffer arbiter 250 is capable of selecting and inserting two or more of the FTI candidate packets 230-234 into link packet 260 per clock cycle.

In various embodiments, packing buffer arbiter 250 includes a combination of combinatorial logic and sequential elements. Packing buffer arbiter 250 is implemented in hardware, software, or a combination of hardware and software. In some embodiments, packing buffer arbiter 250 selects and inserts one or more of FTI candidate packets 230-234 into link packet 260 based on one or more attributes that include a packet age, a priority level of the packet type, a quality-of-service parameter, a source identifier, an application identifier or type, such as a real-time application, an indication of traffic type, such as real-time traffic, a bandwidth requirement or a latency tolerance requirement, and so forth. In some embodiments, packing buffer arbiter 250 selects one of the FTI candidate packets 230-234 for insertion (packing) per clock cycle. In other embodiments, packing buffer arbiter 250 selects two or more of the FTI candidate packets 230-234 for insertion (packing) per clock cycle.

In various embodiments, packing buffer arbiter 250 also determines whether link packet 260 has remaining available data storage space for a given one of the FTI candidate packets 232-234. In some embodiments, packing buffer arbiter 250 also determines whether link packet 260 has remaining available data storage space aligned on a given boundary for a given one of the FTI candidate packets 232-234. In some embodiments, packing buffer arbiter 250 includes control logic for taking into consideration mismatches between the rate of packing (inserting) FTI candidate packets 232-234 into link packet 260 and the rate of creating available data storage space in a receiving queue in the receiver at the other end of the fabric link. This mismatch also results from the network in the fabric adding and deleting idle clock cycles ("bubbles") when the link is available for transmitting the link packet.

In one example, when the fabric interfaces detect data transfer errors and resend data, idle clock cycles ("bubbles") are inserted onto the fabric link. In some cases, these idle cycles are not maintained, but removed between two link packets sent from the packet transmitter 200 to the receiver due to bus utilization and arbitration throughout the network in the fabric. Therefore, to avoid data collision at the receiving queue of the receiver, in an embodiment, packing buffer arbiter 250 stores a count of a minimum number of cycles between received link packets for the packet receiver to avoid data collision in a receiving queue storing packets of the given type.

In one example, the packet receiver on the other end of the fabric link has a receiving queue for a given type (e.g., control response packets) and this receiving queue has two available entries for allocating received packets. Rather than allocate received packets of the given type in any entry, to simplify the access logic and meet timing requirements, in some embodiments, the same two entries in the receiving queue are available for allocating received packets. In a next clock cycle, the information corresponding to the two allocated packets of the given type are relocated to other entries. In an embodiment, the information is shifted down (or up) by two entries. In another embodiment, the information is shifted down (or up) by a single entry. In yet another embodiment, the information is sorted with information stored in other entries based on attributes. Examples of attributes was provided earlier. In various embodiments, packing buffer arbiter 250 in packet transmitter 200 is aware of the implementation in the packet receiver and uses this knowledge when inserting FTI candidate packets 230-234 into link packet 260.

Using the above example, packing buffer arbiter 250 is aware that the minimum number of clock cycles (or cycles) between received link packets for the packet receiver to avoid data collision is one cycle. For example, in clock cycle 1, the packet receiver can receive two control FTI packets of a given type (e.g., control response packets) and allocate them in two entries (e.g., entries 0 and 1) of a receiving queue of the given type. In clock cycle 2, the receiving queue shifts the information corresponding to the recently received control FTI packets from the two entries (e.g., entries 0 and 1) to other entries in the receiving queue. For example, the information stored in entries of the receiving queue are sorted for arbitration purposes, in one embodiment.

In clock cycle 2, the two entries (e.g., entries 0 and 1) are not able to receive new information. If new information for one or more new control FTI packets of the given type are received, then data collision occurs in the two entries (e.g., entries 0 and 1). In clock cycle 3, the two entries (e.g., entries 0 and 1) are once again available for receiving new information to allocate. Therefore, for control FTI packets of the given type in this example, the packet receiver needs a minimum number of one clock cycle between received link packets for the packet receiver to avoid data collision for control FTI packets of the given type. In various embodiments, the minimum number of clock cycles between received link packets to avoid data collision at the packet receiver for control FTI packets of a first type is different than the minimum number of clock cycles for control FTI packets of a second type. In various embodiments, packing buffer arbiter 250 stores separate values for the minimum number of clock cycles for each of the control types such as "Type 1" to "Type N."

In some embodiments, packing buffer arbiter 250 additionally maintains a first count of enabled network cycles, each allowing a next link packet 260 from packet transmitter 200 to use the fabric link. In some embodiments, packing buffer arbiter 250 also maintains a second count of a number of FTI candidate packets of a given type inserted in link packet 260. Therefore, packing buffer arbiter 250 maintains a separate second count for each of the control types such as "Type 1" to "Type N." In various embodiments, packing buffer arbiter 250 determines a sum for FTI packets of a given type by adding three operands. The first operand is the second count for the given type. The second operand is the stored minimum number of clock cycles for the given type. And the third operand is one for a FTI candidate packet that would fit in one or more consecutive sectors of the sectors 262-266 where the consecutive sectors are aligned with a given boundary. In an embodiment, if packing buffer arbiter 250 determines the sum is less than the first count, then packing buffer arbiter 250 inserts the FTI candidate packet into link packet 260 and increments the second count.

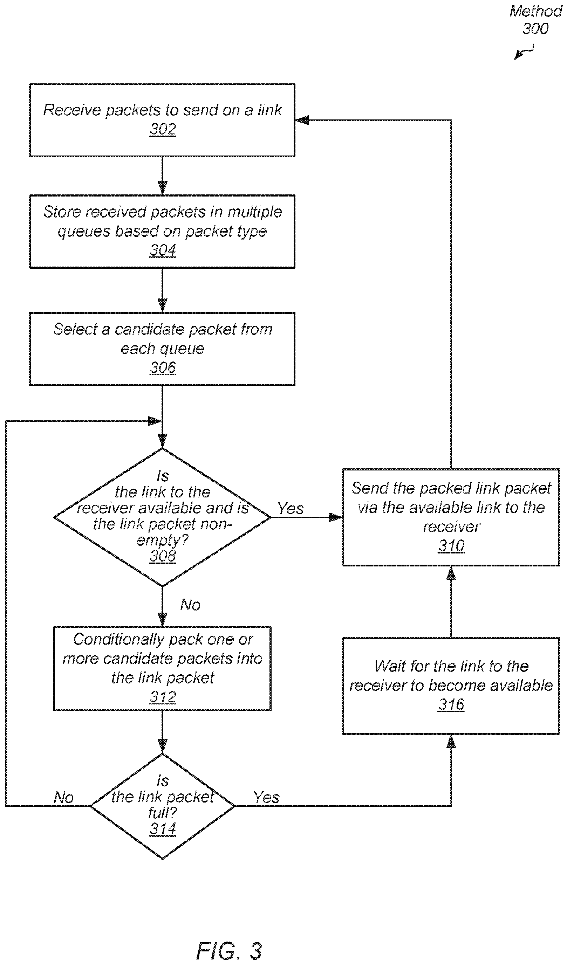

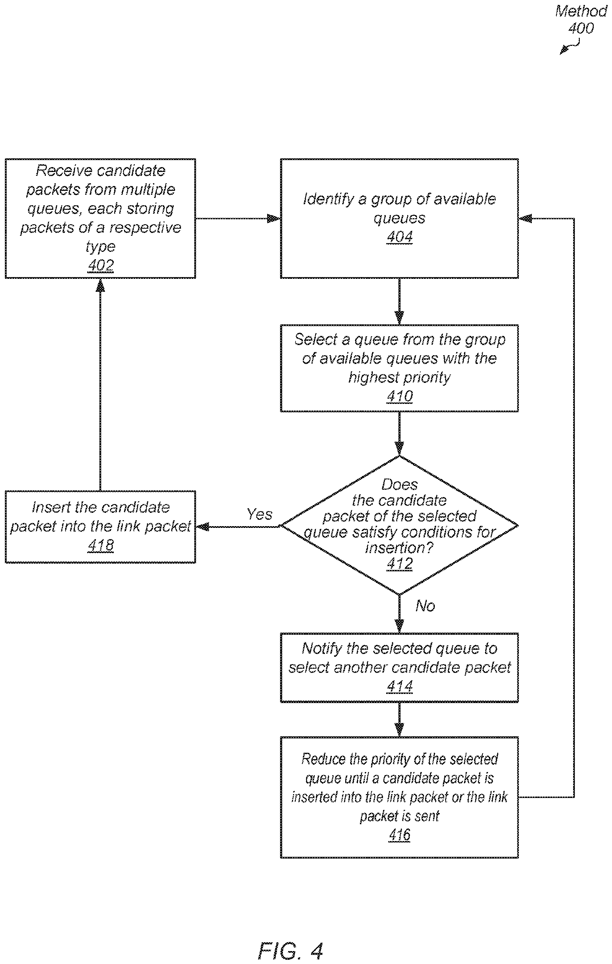

Referring now to FIG. 3, one embodiment of a method 300 for performing efficient data transfer in a computing system is shown. For purposes of discussion, the steps in this embodiment (as well as in Figures 4-5 and 7) are shown in sequential order. However, it is noted that in various embodiments of the described methods, one or more of the elements described are performed concurrently, in a different order than shown, or are omitted entirely. Other additional elements are also performed as desired. Any of the various systems or apparatuses described herein are configured to implement method 300.

Packets are received to send on a link (block 302). In one example, a processing unit generates control request packets to send to a destination. In another example, a memory controller generates control response packets to send to a requesting processing unit. A fabric transport interface includes a packet transmitter, which receives the control packets. The received packets are stored in multiple queues based on packet type (block 304). As described earlier, examples of control packet types include request type, response type, probe type, and token or credit type. Other examples of packet types are also included in other embodiments.

A candidate packet is selected from each queue (block 306). In some embodiments, queue arbiters select candidate packets from the queues based on one or more attributes that include an age, a priority level of the packet type, a priority level of the packet, a quality-of-service parameter, a source identifier, an application identifier or type, such as a real-time application, an indication of traffic type, such as real-time traffic, a bandwidth requirement or a latency tolerance requirement, and so forth.

If the link to the receiver is available and the link packet is non-empty ("yes" branch of the conditional block 308), then the packed link packet is sent via the available link to the receiver (block 310). In some embodiments, the fabric transport interface sends a signal or other indication to a packet transmitter specifying that the fabric link is available for sending the packed link packet. If the link to the receiver is unavailable or the link packet is empty ("no" branch of the conditional block 308), then one or more candidate packets are conditionally packed into the link packet (block 312).

The conditions include whether the link packet has sufficient data storage space for receiving the given candidate packet. In some embodiments, it is also determined whether the link packet has sufficient available data storage space aligned on a given boundary for the given candidate packet. If the link packet is full ("yes" branch of the conditional block 314), then a wait begins for the link to the receiver to become available (block 316). Afterward, control flow of method 300 moves to block 310. If the link packet is not full ("no" branch of the conditional block 314), then control flow of method 300 returns to conditional block 308 where it is determined whether the link to the receiver is available and whether the link packet is empty.

Turning now to FIG. 4, one embodiment of a method 400 for performing efficient data transfer in a computing system is shown. Candidate packets are received from multiple queues, each storing packets of a respective type (block 402). In some embodiments, queue arbiters select candidate packets from queues each clock cycle. In other embodiments, queue arbiters select candidate packets from queues after previously selected candidate packets have been inserted in a link packet. In yet other embodiments, queue arbiters select candidate packets from queues after previously selected candidate packets have been selected by a packing buffer arbiter, but not inserted in the link packet due to unavailable data storage space in the link packet, unavailable data storage space aligned to a given boundary in the link packet, or other unsatisfied conditions.

A group of available queues is identified (block 404). In some embodiments, a given queue is in the group of available queues when the given queue stores one or more candidate packets. In an embodiment, one or more of the multiple queues has a respective limit on a number of packets that are inserted in the link packet from the queue before the link packet is sent on an available link. In some embodiments, the limit is stored in a configuration and status register. In various embodiments, the register is programmable. A queue is selected from the group of available queues with the highest priority (block 410). In some embodiments, the priority is based on one or more attributes that include a packet age, a priority level of the packet type, a quality-of-service parameter, a source identifier, an application identifier or type, such as a real-time application, an indication of traffic type, such as real-time traffic, a bandwidth requirement or a latency tolerance requirement, and so forth.

If the candidate packet of the selected queue satisfies conditions for insertion ("yes" branch of the conditional block 412), then the candidate packet is inserted into the link packet (block 418). As described earlier, in some embodiments, it is determined whether the link packet has remaining available data storage space aligned on a given boundary for the candidate packet. It is also determined whether inserting the candidate packet into the link packet avoids data collision at the receiver by taking into consideration mismatches between the rate of inserting candidate packets into the link packet and the rate of creating available data storage space in a receiving queue in the receiver.

If the candidate packet of the selected queue does not satisfy conditions for insertion ("no" branch of the conditional block 412), then the selected queue is notified to select another candidate packet (block 414). A next candidate packet is chosen by the selected queue in a next clock cycle, in one embodiment. In some embodiments, the priority of the selected queue is reduced until a candidate packet is inserted into the link packet or the link packet is sent (block 416). In other embodiments, the priority of the selected queue is maintained. In yet other embodiments, the priority is maintained for the selected queue, but the selected queue is removed from the group of available queues. Afterward, control flow of method 400 returns to block 404 where the group of available queues is identified. In some embodiments, the loop from block 404 to block 416 or block 418 is reiterated multiple times within a clock cycle.

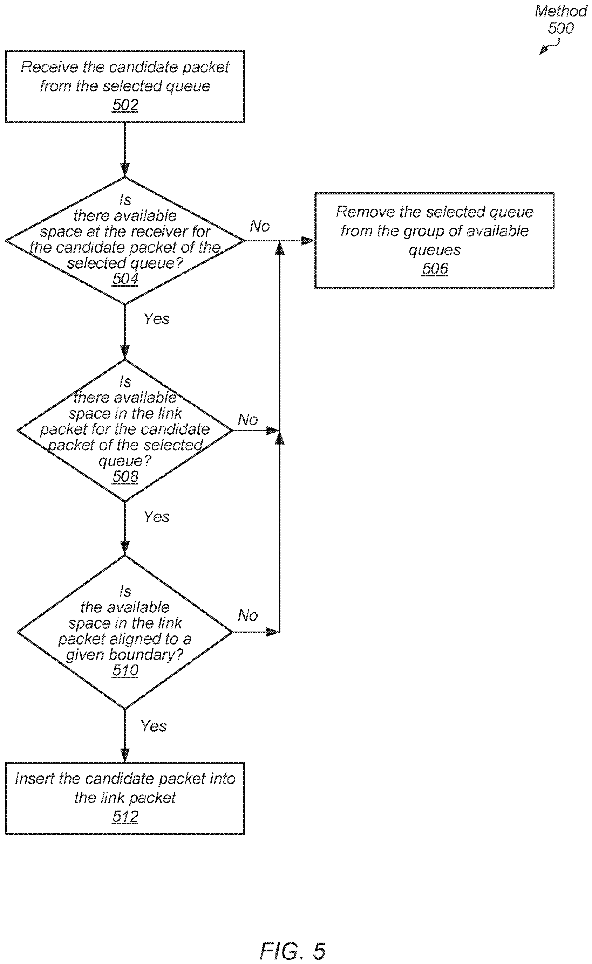

Referring now to FIG. 5, one embodiment of a method 500 for performing efficient data transfer in a computing system is shown. The candidate packet from the selected queue is received (block 502). In an embodiment, a packing buffer arbiter used to pack a link packet receives the candidate packet. If there is no available space at the receiver for the candidate packet of the selected queue ("no" branch of the conditional block 504), then the selected queue is removed from the group of available queues (block 506).

If there is available space at the receiver for the candidate packet of the selected queue ("yes" branch of the conditional block 504), but there is no available space in the link packet for the candidate packet of the selected queue ("no" branch of the conditional block 508), then the selected queue is removed from the group of available queues (block 506). If there is available space in the link packet for the candidate packet of the selected queue ("yes" branch of the conditional block 508), but the available space in the link packet is unaligned to a given boundary ("no" branch of the conditional block 510), then the selected queue is removed from the group of available queues (block 506). If the available space in the link packet is aligned to a given boundary ("yes" branch of the conditional block 510), then the candidate packet is inserted into the link packet (block 512).

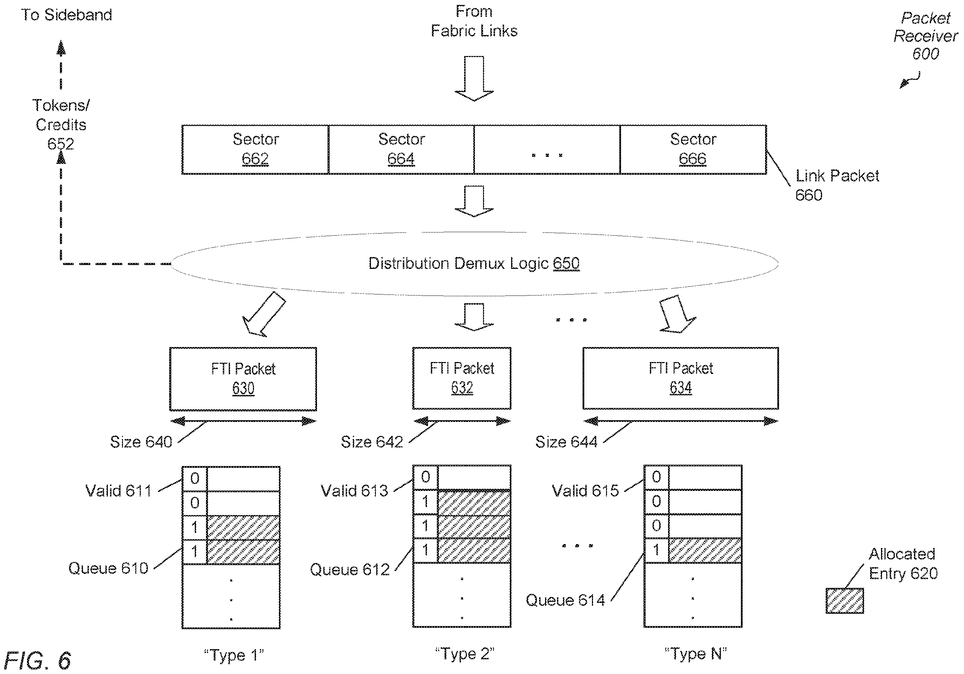

Referring to FIG. 6, a generalized block diagram of one embodiment of a packet receiver 600 is shown. In the illustrated embodiment, packet receiver 600 includes queues 610-614, each for storing packets of a respective type. As shown, packet receiver 600 receives link packet 660 from the fabric link. Link packet 660 has sufficient data storage space for storing two or more fabric transport interface (FTI) packets. Distribution demux logic 650 (or logic 650) analyzes the sectors 662-666 in link packet 600, determines how many FTI control packets are in link packet 660 and where they are located in link packet 660, and sends the FTI control packets to queues 610-614 for storage.

Examples of control packet types stored in queues 610-614 include request type, response type, probe type, and token or credit type. Other examples of packet types are also included in other embodiments. As shown, queue 610 stores packets of "Type 1," which is a control request type in an embodiment. Queue 612 stores packets of "Type 2," which are control response type in an embodiment. Queue 614 stores packets of "Type N," which are control token or credit type in an embodiment.

As shown, link packet 660 is partitioned into sectors 662-666. In an embodiment, each sector is 32 bits. Other data sizes for the sectors 662-666 are possible and contemplated. In an embodiment, link packet 660 includes eight sectors. In other embodiments, link packet 660 includes another number of sectors. In addition to storing data such as control FTI packets, other metadata (not shown) is stored such as an indication of which one(s) of the sectors 662-666 are allocated and where control FTI packets begin, since the control FTI packets have varying data sizes in some embodiments.

In various embodiments, logic 650 includes a combination of combinatorial logic and sequential elements. Logic 650 is implemented in hardware, software, or a combination. As shown, logic 650 removes one or more control FTI packets from link packet 660 and sends them to queues 610-614. In various embodiments, each of the FTI candidate packets 630-634 has different data sizes 640-644. In some embodiments, two or more of the FTI candidate packets 630-634 have a same data size. In an embodiment, one or more of the queues 610-614 stores FTI packets of different sizes. Therefore, when logic 650 sends a FTI packet, such as FTI packet 630 to queue 610, the FTI packet has a different size than a previous FTI packet sent to the same queue. In an example, when queue 610 stores packets of a request type, queue 610 stores uncompressed request packets with a size of 128 bits, and stores compressed request packets with a size of 64 bits. Therefore, some entries of queue 610 store FTI candidate packets with data sizes different from data size 640.

In an embodiment, each of queues 610-614 has two available entries for allocating received packets. Rather than allocate FTI packets 630-634 in any entry, to simplify the access logic and meet timing requirements, in some embodiments, the same two entries in queues 610-614 are available for allocating received packets. As shown, the top two entries are used to receive one or more of FTI packets 630-634. In other embodiments, another number of entries and other locations within queues 610-614 are used. In some embodiments, the valid fields 611, 613 and 615 are used to indicate available entries. In an embodiment, a negated value stored in the valid fields 611, 613 and 615 indicates an available entry, whereas an asserted value stored in the valid fields 611, 613 and 615 indicates an allocated entry.

In a next clock cycle, the newly allocated information in queues 610-614 are relocated to other entries. In an embodiment, the information is shifted down (or up) by two entries. In another embodiment, the information is shifted down (or up) by a single entry. In yet another embodiment, the information is sorted with information stored in other entries based on attributes. Examples of attributes was provided earlier. In various embodiments, packet transmitter 200 (of FIG. 2) is aware of the implementation in packet receiver 600 and uses this knowledge when inserting FTI candidate packets into a link packet.

In some embodiments, logic 650 sends tokens or credits 652 for each of the packet types to a packet transmitter on a sideband connection. In some embodiments, the number of available entries for one or more of the queues 610-614 increases past the default value, such as two entries, based on the deallocation of entries in queues 610-614 when the stored FTI packets are sent for processing. In such cases, the packet transmitter updates its stored values for a minimum number of cycles between received link packets for packet receiver 600 to avoid data collision in queues 610-614.

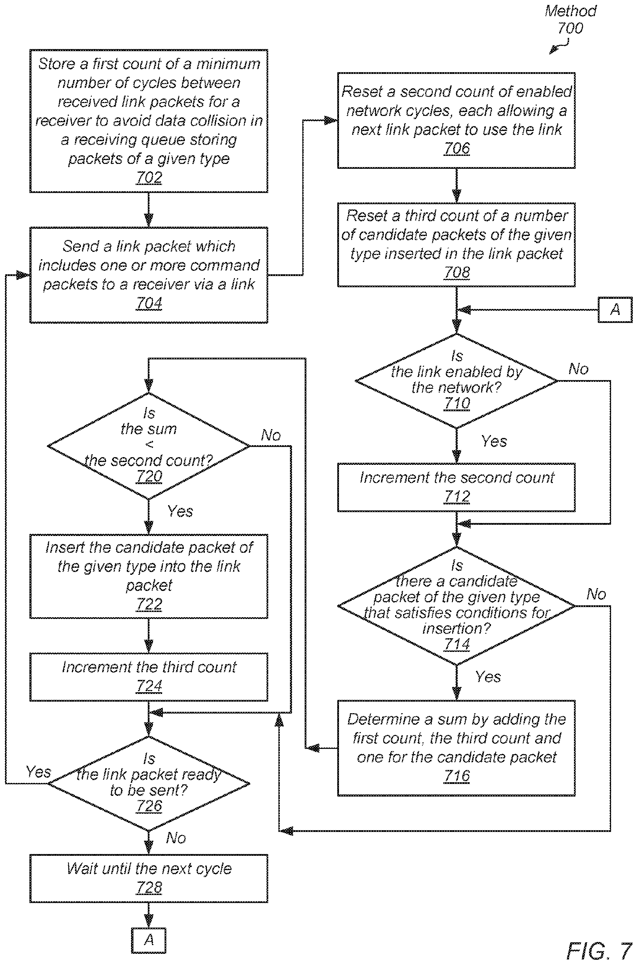

Referring now to FIG. 7, one embodiment of a method 700 for performing efficient data transfer in a computing system is shown. A first count is stored where the first count is a minimum number of cycles between received link packets for a receiver to avoid data collision in a receiving queue storing packets of a given type (block 702). A link packet, which includes one or more command packets, is sent to a receiver via a link (block 704). A second count of enabled network cycles is reset where each enabled network cycle allows a next link packet to use the link (block 706). A third count is reset where the third count is a number of candidate packets of the given type inserted in the link packet (block 708).

If the link is enabled by the network in the fabric ("yes" branch of the conditional block 710), then the second count is incremented (block 712). If there is a candidate packet of the given type that satisfies conditions for insertion ("yes" branch of the conditional block 714), then a sum is determined by adding the first count, the third count and one for the candidate packet (block 716). If the sum is less than the second count ("yes" branch of the conditional block 720), then the candidate packet of the given type is inserted into the link packet (block 722). Additionally, the third count is incremented (block 724). Afterward, control flow of method 700 moves to conditional block 726. Similarly, if there is not a candidate packet of the given type that satisfies conditions for insertion ("no" branch of the conditional block 714), or if the sum is not less than the second count ("no" branch of the conditional block 720), then control flow of method 700 moves to conditional block 726.

If the link packet is ready to be sent ("yes" branch of the conditional block 726), then control flow of method 700 returns to conditional block 704 where a link packet, which includes one or more command packets, is sent to a receiver via a link. In some embodiments, the link packet is considered ready when the fabric transport interface sends a signal or other indication that the link is available and the link packet is non-empty. If the link packet is not ready to be sent ("no" branch of the conditional block 726), then method 700 waits until the next clock cycle (block 728). For example, if the fabric transport interface does not send a signal or other indication that the link is available or the link packet is empty, then the link packet is not ready to be sent. Afterward, control flow of method 700 returns to conditional block 710 through block "A" where at conditional block 710 it is determined whether the link is enabled by the network in the fabric.

In various embodiments, program instructions of a software application are used to implement the methods and/or mechanisms previously described. The program instructions describe the behavior of hardware in a high-level programming language, such as C. Alternatively, a hardware design language (HDL) is used, such as Verilog. The program instructions are stored on a non-transitory computer readable storage medium. Numerous types of storage media are available. The storage medium is accessible by a computing system during use to provide the program instructions and accompanying data to the computing system for program execution. The computing system includes at least one or more memories and one or more processors that execute program instructions.

It should be emphasized that the above-described embodiments are only non-limiting examples of implementations. Numerous variations and modifications will become apparent to those skilled in the art once the above disclosure is fully appreciated.

## Claims

1. An apparatus (200) comprising:
a plurality of queues (210-214), each configured to store packets of a respective type;
a plurality of queue arbiters, each configured to select a candidate packet from a respective one of the plurality of queues (210-214);
a packing arbiter (250) comprising circuitry configured to:
identify a group of available queues from the plurality of queues (210-214), each available queue storing one or more candidate packets;
select a queue from the group of available queues (210-214), in response to determining the selected queue has a highest priority of the group
of available queues (210-214); and **characterized in that** the circuitry is further configured to
insert the candidate packet (230, 232, or 234) from the selected queue into a link packet (260) comprising space for a plurality of candidate packets,
in response to determining that:
there is available data storage space in the link packet (260) to store the candidate packet (230, 232, or 234) from the selected queue; and
the available data storage space in the link packet (260) is aligned to a given boundary of the candidate packet (230, 232, or 234).

2. The apparatus (200) as recited in claim 1, wherein the packing arbiter (250) is further configured to notify a queue arbiter (220, 222, or 224) corresponding to the selected queue to select a different candidate packet, in response to determining the candidate packet (230, 232, or 234) from the selected queue does not satisfy conditions for insertion.

3. The apparatus (200) as recited in claim 1, wherein in response to determining the candidate packet (230, 232, or 234) from the selected queue does not satisfy conditions for insertion, the packing arbiter (250) is further configured to reduce the priority of the selected queue until detecting one of:
a candidate packet is inserted into the link packet (260); and
the link packet (260) is sent.

4. The apparatus (200) as recited in claim 1, wherein one or more of the plurality of queues (210-214) has a respective limit on a number of packets that are inserted in the link packet (260) from the queue before the link packet (260) is sent on an available link.

5. The apparatus (200) as recited in claim 1, wherein determining the candidate packet (230, 232, or 234) from the selected queue satisfies conditions for insertion comprises determining that there is available data storage space at a receiver to store the candidate packet (230, 232, or 234) from the selected queue.

6. The apparatus (200) as recited in claim 1, wherein in response to determining a link packet is sent to a receiver via a link, the packing arbiter (250) is further configured to reset each of:
a first count of enabled network cycles, each allowing a next link packet to use the link; and
a second count of a number of candidate packets of a given type inserted in a link packet.

7. The apparatus (200) as recited in claim 6, wherein in response to determining the link is available for sending a next link packet to the receiver via the link, the packing arbiter (250) is further configured to increment the first count.

8. The apparatus (200) as recited in claim 7, wherein in response to determining that there is a candidate packet of the given type that satisfies conditions for insertion into the next link packet, the packing arbiter (250) is further configured to determine a sum by adding:
the second count,
one for the candidate packet, and
a minimum number of cycles between received link packets for the receiver to avoid data collision in a receiving queue storing packets of the given type.

9. The apparatus (200) as recited in claim 2, wherein the group of available queues comprises one or more queues that:
store at least one valid packet; and
have not been selected a consecutive given number of times.

10. A method, comprising:
storing packets in a plurality of queues (210-214), each configured to store packets of a respective type;
selecting, by a plurality of queue arbiters, a candidate packet from each of the plurality of queues (210-214);
identifying, by circuitry of a packing arbiter (250), a group of available queues from the plurality of queues (210-214), each available queue storing one or more candidate packets;
selecting, by the circuitry, a queue from the group of available queues (210-214), in response to determining, by the control logic, the selected queue has a highest priority of the group of available queues (210-214); and **characterized in that** method further comprises the step of
inserting, by the circuitry, the candidate packet (230, 232, or 234) from the selected queue into a link packet (260) comprising space for a plurality of candidate packets, in response to determining that:
there is available data storage space in the link packet (260) to store the candidate packet (230, 232, or 234) from the selected queue; and
the available data storage space in the link packet (260) is aligned to a given boundary of the candidate packet (230, 232, or 234).

11. The method as recited in claim 10, wherein one or more of the plurality of queues (210-214) has a respective limit on a number of packets that are inserted in the link packet (260) from the queue before the link packet (260) is sent on an available link.

12. The method as recited in claim 10, wherein in response to determining a link packet is sent to a receiver via a link, the method further comprises resetting each of:
a first count of enabled network cycles, each allowing a next link packet to use the link; and
a second count of a number of candidate packets of a given type inserted in a link packet.

13. The method as recited in claim 12, wherein in response to determining the link is available for sending a next link packet to the receiver via the link, the method further comprises incrementing the first count.

14. The method as recited in claim 13, wherein in response to determining that there is a candidate packet of the given type that satisfies conditions for insertion into the next link packet, the method further comprises determining a sum by adding:
the second count,
one for the candidate packet, and
a minimum number of cycles between received link packets for the receiver to avoid data collision in a receiving queue storing packets of the given type.

15. A non-transitory computer readable storage medium storing program instructions, wherein the program instructions are executable by a processor to perform steps of the method as recited in claims 10-14.

## Patentansprüche

1. Vorrichtung (200), umfassend:
eine Vielzahl von Warteschlangen (210-214), die jeweils dazu konfiguriert sind, Pakete eines jeweiligen Typs zu speichern;
eine Vielzahl von Warteschlangen-Arbitern, die jeweils dazu konfiguriert sind, ein Kandidatenpaket aus einer jeweiligen einen der Vielzahl von Warteschlangen (210-214) auszuwählen;
einen Packungsarbiter (250), der eine Schaltung umfasst, die zu Folgendem konfiguriert ist:
Identifizieren einer Gruppe verfügbarer Warteschlangen aus der Vielzahl von Warteschlangen (210-214), wobei jede verfügbare Warteschlange ein oder mehrere Kandidatenpakete speichert;
Auswählen einer Warteschlange aus der Gruppe verfügbarer Warteschlangen (210-214) als Reaktion darauf, dass bestimmt wird, dass die ausgewählte Warteschlange eine höchste Priorität der Gruppe verfügbarer Warteschlangen (210-214) hat; und **dadurch gekennzeichnet, dass** die Schaltung ferner dazu konfiguriert ist, das Kandidatenpaket (230, 232 oder 234) aus der ausgewählten Warteschlange in ein Verbindungspaket (260) einzufügen, das Platz für eine Vielzahl von Kandidatenpaketen umfasst, als Reaktion darauf, dass bestimmt wird, dass:
verfügbarer Datenspeicherplatz in dem Verbindungspaket (260) vorhanden ist, um das Kandidatenpaket (230, 232 oder 234) aus der ausgewählten Warteschlange zu speichern; und
der verfügbare Datenspeicherplatz in dem Verbindungspaket (260) in Einklang mit einer gegebenen Grenze des Kandidatenpakets (230, 232 oder 234) ist.

2. Vorrichtung (200) nach Anspruch 1, wobei der Packungsarbiter (250) ferner dazu konfiguriert ist, einen Warteschlangen-Arbiter (220, 222 oder 224), der der ausgewählten Warteschlange entspricht, zu benachrichtigen, ein anderes Kandidatenpaket als Reaktion darauf auszuwählen, dass bestimmt wird, dass das Kandidatenpaket (230, 232 oder 234) aus der ausgewählten Warteschlange die Bedingungen zum Einfügen nicht erfüllt.

3. Vorrichtung (200) nach Anspruch 1, wobei als Reaktion darauf, dass bestimmt wird, dass das Kandidatenpaket (230, 232 oder 234) aus der ausgewählten Warteschlange die Bedingungen zum Einfügen nicht erfüllt, der Packungsarbiter (250) ferner dazu konfiguriert ist, die Priorität der ausgewählten Warteschlange zu reduzieren, bis eines der Folgenden erkannt wird:
ein Kandidatenpaket wird in das Verbindungspaket (260) eingefügt; und
das Verbindungspaket (260) wird gesendet.

4. Vorrichtung (200) nach Anspruch 1, wobei eine oder mehrere der Vielzahl von Warteschlangen (210-214) eine jeweilige Grenze für eine Anzahl von Paketen aufweisen, die in das Verbindungspaket (260) aus der Warteschlange eingefügt werden, bevor das Verbindungspaket (260) auf einer verfügbaren Verbindung gesendet wird.

5. Vorrichtung (200) nach Anspruch 1, wobei Bestimmen, dass das Kandidatenpaket (230, 232 oder 234) aus der ausgewählten Warteschlange die Bedingungen zum Einfügen erfüllt, Bestimmen umfasst, dass verfügbarer Datenspeicherplatz bei einem Empfänger vorhanden ist, um das Kandidatenpaket (230, 232 oder 234) aus der ausgewählten Warteschlange zu speichern.

6. Vorrichtung (200) nach Anspruch 1, wobei als Reaktion darauf, dass bestimmt wird, dass ein Verbindungspaket über eine Verbindung an einen Empfänger gesendet wird, der Packungsarbiter (250) ferner dazu konfiguriert ist, jedes der Folgenden zurückzusetzen:
einen ersten Zähler aktivierter Netzwerkzyklen, die es jeweils einem nächsten Verbindungspaket ermöglichen, die Verbindung zu verwenden; und
einen zweiten Zähler einer Anzahl von Kandidatenpaketen eines gegebenen Typs, die in ein Verbindungspaket eingefügt werden.

7. Vorrichtung (200) nach Anspruch 6, wobei als Reaktion darauf, dass bestimmt wird, dass die Verbindung zum Senden eines nächsten Verbindungspakets an den Empfänger über die Verbindung verfügbar ist, der Packungsarbiter (250) ferner dazu konfiguriert ist, den ersten Zähler zu erhöhen.

8. Vorrichtung (200) nach Anspruch 7, wobei als Reaktion darauf, dass bestimmt wird, dass ein Kandidatenpaket des gegebenen Typs vorhanden ist, das die Bedingungen zum Einfügen in das nächste Verbindungspaket erfüllt, der Packungsarbiter (250) ferner dazu konfiguriert ist, eine Summe durch Addieren von Folgendem zu bestimmen:
des zweiten Zählers,
eins für das Kandidatenpaket und
einer Mindestanzahl von Zyklen zwischen empfangenen Verbindungspaketen für den Empfänger, um eine Datenkollision in einer Empfangswarteschlange zu vermeiden, die Pakete des gegebenen Typs speichert.

9. Vorrichtung (200) nach Anspruch 2, wobei die Gruppe verfügbarer Warteschlangen eine oder mehrere Warteschlangen umfasst, die:
mindestens ein gültiges Paket speichern; und
nicht eine bestimmte Anzahl von Malen in Folge ausgewählt wurden.

10. Verfahren, umfassend:
Speichern von Paketen in einer Vielzahl von Warteschlangen (210-214), die jeweils dazu konfiguriert sind, Pakete eines jeweiligen Typs zu speichern;
Auswählen eines Kandidatenpakets aus jeder der Vielzahl von Warteschlangen (210-214) durch eine Vielzahl von Warteschlangen-Arbitern;
Identifizieren einer Gruppe verfügbarer Warteschlangen aus der Vielzahl von Warteschlangen (210-214) durch eine Schaltung eines Packungsarbiters (250), wobei jede verfügbare Warteschlange ein oder mehrere Kandidatenpakete speichert;
Auswählen einer Warteschlange aus der Gruppe verfügbarer Warteschlangen (210-214) durch die Schaltung als Reaktion darauf, dass durch die Steuerlogik bestimmt wird, dass die ausgewählte Warteschlange eine höchste Priorität der Gruppe verfügbarer Warteschlangen (210-214) hat; und **dadurch gekennzeichnet, dass** das Verfahren ferner den Schritt des Einfügens des Kandidatenpakets (230, 232 oder 234) aus der ausgewählten Warteschlange in ein Verbindungspaket (260), das Platz für eine Vielzahl von Kandidatenpaketen, durch die Schaltung als Reaktion darauf umfasst, dass bestimmt wird, dass:
verfügbarer Datenspeicherplatz in dem Verbindungspaket (260) vorhanden ist, um das Kandidatenpaket (230, 232 oder 234) aus der ausgewählten Warteschlange zu speichern; und
der verfügbare Datenspeicherplatz in dem Verbindungspaket (260) in Einklang mit einer gegebenen Grenze des Kandidatenpakets (230, 232 oder 234) ist.

11. Verfahren nach Anspruch 10, wobei eine oder mehrere der Vielzahl von Warteschlangen (210-214) eine jeweilige Grenze für eine Anzahl von Paketen aufweisen, die in das Verbindungspaket (260) aus der Warteschlange eingefügt werden, bevor das Verbindungspaket (260) auf einer verfügbaren Verbindung gesendet wird.

12. Verfahren nach Anspruch 10, wobei als Reaktion darauf, dass bestimmt wird, dass ein Verbindungspaket über eine Verbindung an einen Empfänger gesendet wird, das Verfahren ferner das Zurücksetzen jedes der Folgenden umfasst:
eines ersten Zählers aktivierter Netzwerkzyklen, die es jeweils einem nächsten Verbindungspaket ermöglichen, die Verbindung zu verwenden; und
eines zweiten Zählers einer Anzahl von Kandidatenpaketen eines gegebenen Typs, die in ein Verbindungspaket eingefügt werden.

13. Verfahren nach Anspruch 12, wobei als Reaktion darauf, dass bestimmt wird, dass die Verbindung zum Senden eines nächsten Verbindungspakets an den Empfänger über die Verbindung verfügbar ist, das Verfahren ferner Erhöhen des ersten Zählers umfasst.

14. Verfahren nach Anspruch 13, wobei das Verfahren als Reaktion darauf, dass bestimmt wird, dass ein Kandidatenpaket des gegebenen Typs vorhanden ist, das die Bedingungen zum Einfügen in das nächste Verbindungspaket erfüllt, ferner Bestimmen einer Summe durch Addieren von Folgendem umfasst:
des zweiten Zählers,
eins für das Kandidatenpaket und
einer Mindestanzahl von Zyklen zwischen empfangenen Verbindungspaketen für den Empfänger, um eine Datenkollision in einer Empfangswarteschlange zu vermeiden, die Pakete des gegebenen Typs speichert.

15. Nicht transitorisches computerlesbares Speichermedium, das Programmanweisungen speichert, wobei die Programmanweisungen durch einen Prozessor ausführbar sind, um Schritte des Verfahrens nach Anspruch 10-14 auszuführen.

## Revendications

1. Appareil (200) comprenant :
une pluralité de files d'attente (210-214), chacune configurée pour stocker des paquets d'un type respectif ;
une pluralité d'arbitres de file d'attente, chacun configuré pour sélectionner un paquet candidat parmi une file d'attente respective de la pluralité de files d'attente (210-214) ;
un arbitre de conditionnement (250) comprenant un circuit configuré pour :
identifier un groupe de files d'attente disponibles parmi la pluralité de files d'attente (210-214), chaque file d'attente disponible stockant un ou plusieurs paquets candidats ;
sélectionner une file d'attente parmi le groupe de files d'attente disponibles (210-214), en réponse à la détermination que la file d'attente sélectionnée a la priorité la plus élevée du groupe de files d'attente disponibles (210-214) ; et **caractérisé en ce que** le circuit est en outre configuré pour insérer le paquet candidat (230, 232 ou 234) de la file d'attente sélectionnée dans un paquet de liaison (260) comprenant de l'espace pour une pluralité de paquets candidats, en réponse à la détermination que :
il y a un espace de stockage de données disponible dans le paquet de liaison (260) pour stocker le paquet candidat (230, 232 ou 234) de la file d'attente sélectionnée ; et
l'espace de stockage de données disponible dans le paquet de liaison (260) est aligné sur une limite donnée du paquet candidat (230, 232 ou 234).

2. Appareil (200) selon la revendication 1, dans lequel l'arbitre de conditionnement (250) est en outre configuré pour notifier à un arbitre de file d'attente (220, 222 ou 224) correspondant à la file d'attente sélectionnée de sélectionner un paquet candidat différent, en réponse à la détermination que le paquet candidat (230, 232 ou 234) de la file d'attente sélectionnée ne satisfait pas aux conditions d'insertion.

3. Appareil (200) selon la revendication 1, dans lequel en réponse à la détermination que le paquet candidat (230, 232 ou 234) de la file d'attente sélectionnée ne satisfait pas aux conditions d'insertion, l'arbitre de conditionnement (250) est en outre configuré pour réduire la priorité de la file d'attente sélectionnée jusqu'à la détection de l'un parmi les éléments suivants :
un paquet candidat est inséré dans le paquet de liaison (260) ; et
le paquet de liaison (260) est envoyé.

4. Appareil (200) selon la revendication 1, dans lequel une ou plusieurs de la pluralité de files d'attente (210-214) ont une limite respective sur un nombre de paquets qui sont insérés dans le paquet de liaison (260) de la file d'attente avant que le paquet de liaison (260) ne soit envoyé sur une liaison disponible.

5. Appareil (200) selon la revendication 1, dans lequel la détermination que le paquet candidat (230, 232 ou 234) de la file d'attente sélectionnée satisfait aux conditions d'insertion comprend la détermination qu'il y a un espace de stockage de données disponible au niveau d'un récepteur pour stocker le paquet candidat (230, 232 ou 234) de la file d'attente sélectionnée.

6. Appareil (200) selon la revendication 1, dans lequel en réponse à la détermination qu'un paquet de liaison est envoyé à un récepteur via une liaison, l'arbitre de conditionnement (250) est en outre configuré pour réinitialiser chacun parmi :
un premier décompte de cycles de réseau activés, chacun permettant à un paquet de liaison suivant d'utiliser la liaison ; et
un second décompte d'un nombre de paquets candidats d'un type donné insérés dans un paquet de liaison.

7. Appareil (200) selon la revendication 6, dans lequel en réponse à la détermination que la liaison est disponible pour envoyer un paquet de liaison suivant au récepteur via la liaison, l'arbitre de conditionnement (250) est en outre configuré pour incrémenter le premier décompte.

8. Appareil (200) selon la revendication 7, dans lequel en réponse à la détermination qu'il y a un paquet candidat du type donné qui satisfait aux conditions d'insertion dans le paquet de liaison suivant, l'arbitre de conditionnement (250) est en outre configuré pour déterminer une somme en ajoutant :
le second décompte,
un pour le paquet candidat, et
un nombre minimum de cycles entre les paquets de liaison reçus pour que le récepteur évite une collision de données dans une file d'attente de réception stockant des paquets du type donné.

9. Appareil (200) selon la revendication 2, dans lequel le groupe de files d'attente disponibles comprend une ou plusieurs files d'attente qui :
stockent au moins un paquet valide ; et
n'ont pas été sélectionnées un certain nombre de fois consécutives.

10. Procédé, comprenant :
le stockage de paquets dans une pluralité de files d'attente (210-214), chacune configurée pour stocker des paquets d'un type respectif ;
la sélection, par une pluralité d'arbitres de file d'attente, d'un paquet candidat parmi chacune de la pluralité de files d'attente (210-214) ;
l'identification, par un circuit d'un arbitre de conditionnement (250), d'un groupe de files d'attente disponibles parmi la pluralité de files d'attente (210-214), chaque file d'attente disponible stockant un ou plusieurs paquets candidats ;
la sélection, par le circuit, d'une file d'attente parmi le groupe de files d'attente disponibles (210-214), en réponse à la détermination, par la logique de commande, que la file d'attente sélectionnée a la priorité la plus élevée du groupe de files d'attente disponibles (210-214) ; et **caractérisé en ce que** le procédé comprend en outre l'étape
d'insertion, par le circuit, du paquet candidat (230, 232 ou 234) de la file d'attente sélectionnée dans un paquet de liaison (260) comprenant de l'espace pour une pluralité de paquets candidats, en réponse à la détermination que :
il y a un espace de stockage de données disponible dans le paquet de liaison (260) pour stocker le paquet candidat (230, 232 ou 234) de la file d'attente sélectionnée ; et
l'espace de stockage de données disponible dans le paquet de liaison (260) est aligné sur une limite donnée du paquet candidat (230, 232 ou 234).

11. Procédé selon la revendication 10, dans lequel une ou plusieurs de la pluralité de files d'attente (210-214) ont une limite respective sur un nombre de paquets qui sont insérés dans le paquet de liaison (260) de la file d'attente avant que le paquet de liaison (260) ne soit envoyé sur une liaison disponible.

12. Procédé selon la revendication 10, dans lequel en réponse à la détermination qu'un paquet de liaison est envoyé à un récepteur via une liaison, le procédé comprend en outre la réinitialisation de chacun parmi :
un premier décompte de cycles de réseau activés, chacun permettant à un paquet de liaison suivant d'utiliser la liaison ; et
un second décompte d'un nombre de paquets candidats d'un type donné insérés dans un paquet de liaison.

13. Procédé selon la revendication 12, dans lequel en réponse à la détermination que la liaison est disponible pour envoyer un paquet de liaison suivant au récepteur via la liaison, le procédé comprend en outre l'incrémentation du premier décompte.

14. Procédé selon la revendication 13, dans lequel en réponse à la détermination qu'il y a un paquet candidat du type donné qui satisfait aux conditions d'insertion dans le paquet de liaison suivant, le procédé comprend en outre la détermination d'une somme en ajoutant :
le second décompte,
un pour le paquet candidat, et
un nombre minimum de cycles entre les paquets de liaison reçus pour que le récepteur évite une collision de données dans une file d'attente de réception stockant des paquets du type donné.

15. Support de stockage non transitoire lisible par ordinateur stockant des instructions de programme, dans lequel les instructions de programme sont exécutables par un processeur pour mettre en œuvre les étapes du procédé selon les revendications 10 à 14.
